# EUROPÄISCHE PATENTSCHRIFT

(11) **EP 2 377 665 B1**
(45) Veröffentlichungstag und Bekanntmachung des Hinweises auf die Patenterteilung: **19.09.2012**
(21) Anmeldenummer: 11002333.0
(22) Anmeldetag: 22.03.2011
(51) Int. Cl.: B29C 45/17

(54) **Vorrichtung und Verfahren zum Spritzgiessen eines mindestens einen Hohlraum aufweisenden Formteils**
Device and method for injection moulding a moulded part comprising at least one cavity
Dispositif et procédé de moulage par injection d'un élément de formage comprenant au moins un espace creux

(30) Priorität: 17.04.2010 DE 102010015453
(43) Veröffentlichungstag der Anmeldung: 19.10.2011
(73) Patentinhaber: Wittmann Battenfeld GmbH, 2542 Kottingbrunn (AT)
(72) Erfinder: Eckardt, Helmut, 58540 Meinerzhagen (DE)
(74) Vertreter: Gosdin, Michael

(56) Entgegenhaltungen:
- EP-B1- 0 757 936
- JP-A- 5 031 746
- US-A1- 2002 117 783

## Beschreibung

Die Erfindung betrifft eine Vorrichtung zum Spritzgießen eines mindestens einen Hohlraum aufweisenden Formteils, wobei sich der Hohlraum zumindest abschnittsweise in Richtung einer Längsachse des Formteils erstreckt, mit einem mindestens zweiteiligen Spritzgießwerkzeug, das eine Kavität aufweist, die zumindest einen sich in Richtung der Längsachse erstreckenden Kavitätsabschnitt hat, wobei das Spritzgießwerkzeug mindestens eine Schmelzeeinspritzöffnung für Kunststoffschmelze aufweist, wobei das Spritzgießwerkzeug eine Eintrittsöffnung für eine Fluidzuführdüse aufweist, wobei an der Fluidzuführdüse im Bereich einer Fluidöffnung ein Projektil anordenbar ist, das infolge des injizierten Fluids in Richtung der Längsachse durch den noch schmelzflüssigen Kunststoff getrieben werden kann. Des weiteren betrifft die Erfindung ein Verfahren zum Spritzgießen eines mindestens einen Hohlraum aufweisenden Formteils.

Eine Vorrichtung dieser Art ist beispielsweise aus der EP 0 757 936 B1 bekannt. Hier ist beschrieben, beim Spritzgießen eines Kunststoff-Formteils ein Projektil an einem ersten Längsende einer Spritzgießkavität in eine Projektilaufnahme des Formwerkzeugs einzulegen und durch ein unter Druck stehendes Fluid durch die mit noch teilweise fliessfähigem Kunststoff gefüllte Kavität hindurch in eine am anderen, zweiten Längsende der Kavität gelegene Nebenkavität zu treiben. Damit kann erreicht werden, in der Kavität ein hohles, rohrförmiges Bauteil zu erzeugen. Zu diesem Zweck führt eine Zuführleitung zur Zuführung von unter Druck stehendem Fluid zu der Projektilaufnahme, wo das unter Druck stehende Fluid bei entsprechender Strömungsfreigabe auf das Projektil antreibend einwirken kann.

Eine ähnliche Lösung wird in der DE 10 2008 023 473 A1 beschrieben.

Von Vorteil ist, dass mit den vorbekannten Vorrichtungen bzw. Verfahren bereits rohrförmige Kunststoff-Formkörper hergestellt werden können, die sich durch eine sehr gleichmäßige Wanddicke auszeichnen. Diesbezüglich wird ein besseres Ergebnis erzielt, als es mit dem klassischen Gasinnendruckspritzgießen möglich ist. Dieses Verfahren kann grundsätzlich mit beliebigen Fluiden (Gas und Flüssigkeit) betrieben werden.

Nachteilig ist allerdings, dass mit den vorbekannten Verfahren und Vorrichtungen unter Einsatz des genannten Projektils, das durch die Schmelze getrieben wird, praktisch keine Formteile mit geschlossenem Hohlraum herstellbar sind. Gerade derartige Formteile werden in erheblichem Umfang in der Technik benötigt, z. B. als Handgriff im Auto.

Vorteilhaft ist es allerdings bei der Gasinnendrucktechnik, dass mit relativ dünnen Gasinjektionsdüsen gearbeitet werden kann, so dass am fertigen Formteil lediglich eine kleine Öffnung verbleibt (Durchmesser der Gasinjektionsdüse zwischen 3 und 8 mm).

Nachteilig bei der eingangs genannten Projektil-Technologie ist indes, dass bei den bekannten Lösungen relativ große Öffnungen im Formteil verbleiben, was sich durch die Einbringung des Projektils in das Innere des Formteils ergibt (s. hierzu die genannte DE 10 2008 023 473 A1**)**.

Der Erfindung liegt daher die **Aufgabe** zugrunde, eine Vorrichtung der eingangs genannten Art sowie ein entsprechendes Verfahren so fortzubilden, dass die genannten Nachteile beim Einsatz der Projektil-Technik vermieden werden können. Es soll also möglich werden, Kunststoff-Formteile mit weitgehend abgeschlossenen Hohlräumen in ihrem Inneren zu fertigen, dabei die Vorteile der Projektil-Technik bezüglich der sehr gleichmäßigen Formteil-Wandstärke zu erhalten und am fertigen Formteil nur eine minimale Öffnung zu hinterlassen, so dass sich Formteile herstellen lassen, die klassisch bislang im Gasinnendruckverfahren gefertigt wurden.

Die **Lösung** dieser Aufgabe durch die Erfindung ist vorrichtungsgemäß dadurch gekennzeichnet, dass die Fluidzuführdüse einen in die Kavität eintretenden Abschnitt aufweist, der in einer Einschubrichtung der Fluidzuführdüse in die Kavität hinterschnittsfrei ausgebildet ist, wobei zwischen der Längsachse und der Einschubrichtung ein Winkel vorliegt, der mindestens 30° beträgt. Der Winkel liegt bevorzugt zwischen 80° und 90°.

Das Formteil schließt den Hohlraum, abgesehen von der Eintrittsöffnung für den eintretenden Abschnitt der Fluidzuführdüse, dabei bevorzugt vollständig ein.

Der in die Kavität eintretende Abschnitt der Fluidzuführdüse weist bevorzugt eine zylindrische Form auf.

Die Fluidöffnung am in die Kavität eintretenden Abschnitt der Fluidzuführdüse kann dabei als Bohrung ausgebildet sein, deren Achse vorzugsweise in Richtung der Längsachse des Formteils weist. In diesem Fall sieht eine besonders bevorzugte Ausgestaltung der Erfindung vor, dass das Projektil an seinem entgegen der Vortriebsrichtung liegenden Ende einen zapfenförmigen Vorsprung aufweist, der zum abdichtenden Einsetzen in die Bohrung ausgebildet ist.

Eine Halterung für das Projektil im Bereich der Fluidöffnung der Fluidzuführdüse und das Projektil können so ausgebildet sein, dass das Projektil in seiner in die Halterung eingesetzten Position verdreh- und kippsicher gehalten wird.

Die Halterung für das Projektil im Bereich der Fluidöffnung der Fluidzuführdüse und/oder das Projektil können auch so ausgebildet sein, dass ein Widerstand gegen das Lösen des Projektils im auf die Fluidzuführdüse, aufgesetzten Zustand vorliegt, wobei die Ausbildung insbesondere eine Aufrauung der Kontaktfläche zwischen Halterung und Projektil ist.

Das Projektil kann eine Außenumfangskontur aufweisen, die der Außenkontur des Formteils unter Berücksichtigung einer weitgehend konstanten Wanddicke des Formteils zwischen dem Hohlraum und der Außenkontur des Formteils entspricht.

Das vorgeschlagene Verfahren zum Spritzgießen des Formteils unter Einsatz der genannten Vorrichtung sieht erfindungsgemäß die Schritte vor:
a) Positionieren des Projektils auf der Fluidzuführdüse, Einbringen der Fluidzuführdüse samt Projektil in die Kavität des Spritzgießwerkzeugs, Schließen des Spritzgießwerkzeugs;
b) Einspritzen von Kunststoffschmelze in die Kavität, so dass der in die Kavität hineinragende Abschnitt der Fluidzuführdüse samt Projektil von der Kunststoffschmelze ummantelt ist, wobei das Volumen der Kunststoffschmelze so bemessen ist, dass es zur vollständigen Füllung der Kavität unter Berücksichtigung des gewünschten Hohlraums gerade ausreicht;
c) Injektion von Fluid mittels der Fluidzuführdüse, so dass das Projektil abgeschossen und entlang der Längsachse durch das noch schmelzflüssige Material getrieben wird, bis die Kavität vollständig mit Kunststoffschmelze gefüllt ist;
d) Abkühlenlassen der Kunststoffschmelze;
e) Öffnen des Spritzgießwerkzeugs, Entnahme des Formteils, Abziehen des in das Formteil hineinragenden Abschnitts der Fluidzuführdüse.

Bei dieser Verfahrensweise wird also mit einer Teilfüllung der Kavität gearbeitet.

Eine alternative Ausgestaltung des erfindungsgemäßen Verfahrens sieht die Schritte vor:
a) Positionieren des Projektils auf der Fluidzuführdüse, Einbringen der Fluidzuführdüse samt Projektil in die Kavität des Spritzgießwerkzeugs, Schließen des Spritzgießwerkzeugs;
b) Einspritzen von Kunststoffschmelze in die Kavität, wobei die Kavität des Spritzgießwerkzeugs vollständig mit Kunststoffschmelze gefüllt wird;
c) Injektion von Fluid mittels der Fluidzuführdüse, so dass das Projektil abgeschossen und entlang der Längsachse durch das noch schmelzflüssige Material getrieben wird, wobei ein Teil der Kunststoffschmelze in eine Überlaufkavität und/oder in den Schneckenvorraum einer Einspritzschnecke aus der Kavität des Spritzgießwerkzeugs wieder ausgetrieben wird;
d) Abkühlenlassen der Kunststoffschmelze;
e) Öffnen des Spritzgießwerkzeugs, Entnahme des Formteils, Abziehen des in das Formteil hineinragenden Abschnitts der Fluidzuführdüse.

Hier wird also mit "full shot"-Technik (vollständige Füllung der Kavität) gearbeitet, wobei die überschüssige Kunststoffschmelze in eine Nebenkavität oder in den Schneckenvorraum wieder verdrängt wird.

Die in den Teilschritten a) und e) genannten einzelnen Schritte sind nicht als zeitliche Abfolge zu verstehen. Es ist vom konkreten Anwendungsfall abhängig, wie die Reihenfolge des Einbringens der Fluidzuführdüse und des Aufsetzens des Projektils ist. Es kann im konkreten Einzelfall vorgesehen werden, dass erst das Projektil auf der Fluidzuführdüse aufgesetzt und dann die Fluidzuführdüse in die Kavität eingebracht wird. Es ist aber auch die umgekehrte Reihenfolge oder die Gleichzeitigkeit möglich. Es kann auch vorgesehen werden, dass die Fluidzuführdüse (außerhalb der Werkzeugtrennebene) zuerst in die formgebende Kavität des Werkzeugs eintaucht. Dann wird das Projektil auf die Fluidzuführdüse aufgesetzt und das Werkzeug geschlossen. Entsprechendes gilt für die Abfolge der einzelnen Teilschritte des Schritts e). Es kann namentlich erforderlich sein, dass das Abziehen der in das Formteil hineinragenden Fluidzuführdüse vor dem Öffnen des Werkzeugs erfolgen muss (z. B. falls die Fluidzuführdüse nicht in der Entformungsrichtung liegt).

Die vorgeschlagene Vorrichtung bzw. das Verfahren haben folgende Vorteile:
Die Fixierung des Projektils auf der Fluidzuführdüse erfolgt in der Weise, dass die Austrittsöffnung für das Fluid verschlossen wird.

Verwendet wird eine kleine offene Injektionsdüse mit einer Einrichtung (z. B. Abflachungen) zur Projektilzentrierung und -halterung.

Die Wanddicke ist durch Wahl des Durchmessers des vorzugsweise im Querschnitt kreisförmig ausgeführten Projektils einstellbar.

Die Länge des Hohlraums ist durch die Vorlage an Kunststoffschmelze in die Kavität einstellbar.

Zum Einsatz kommt eine kleine und einfache, kostengünstige Injektionsdüse ohne Verschluss.

Die Kühlzeiten sind relativ kurz, da sich der Kunststoff sofort verfestigt (insbesondere bei Einsatz von Wasser als Fluid).

Die Außenkontur des Projektils kann zum Erreichen gleichmäßiger Wanddicken der Außenkontur des Formteils angepasst werden.

In der Zeichnung sind Ausführungsbeispiele der Erfindung dargestellt. Es zeigen:
- Fig. 1: in der Seitenansicht ein geschnitten dargestelltes Kunststoff-Formteil, das einen sich entlang einer Längsachse erstreckenden Hohlraum aufweist,
- Fig. 2: einen Ausschnitt aus einem Spritzgießwerkzeug, das mit einer Fluidzuführdüse, zur Durchführung der Projektil-Technik ausgestattet ist,
- Fig. 3: die Ansicht der Fluidzuführdüse, samt Projektil in Richtung "C" gemäß Fig. 2 betrachtet,
- Fig. 4: die Ansicht der Fluidzuführdüse samt Projektil in Richtung "C" gemäß Fig. 2 betrachtet gemäß einer zu Fig. 3 alternativen Ausführungsform der Erfindung,
- Fig. 5: die Einzelheit "Z" gemäß Fig. 4, wobei schematisch die Aufrauung zweier sich kontaktierender Oberflächen illustriert ist,

- Fig. 6: schematisch den Verlauf des Herstellprozesses des Formteils gemäß Fig. 1 mit der Projektil-Technik, wobei mehrere aufeinander folgende Stellungen des Projektils dargestellt sind,
- Fig. 7: den in eine Spritzgießkavität hineinragenden Abschnitt einer Fluidzuführdüse mit auf diese aufgesetztem Projektil in der Seitenansicht analog zu Fig. 2,
- Fig. 8: die Fluidzuführdüse mit auf diese aufgesetztem Projektil im Schnitt A-B gemäß Fig. 7,
- Fig. 9a: bis
- Fig. 9e: in zeitlicher Abfolge in fünf Schritten das Verfahren zur Herstellung eines hohlen Kunststoff-Formkörpers.

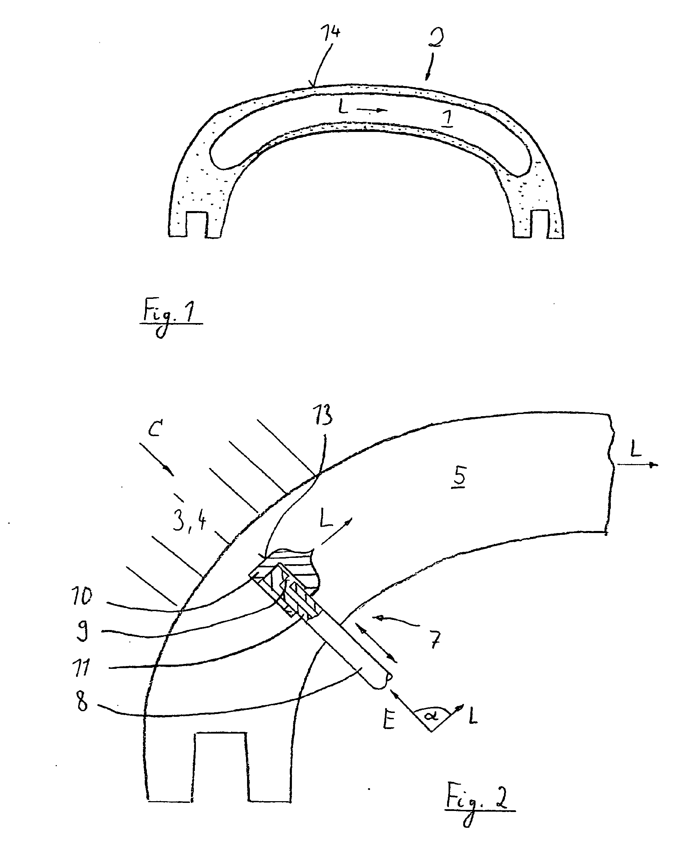

In Fig. 1 ist ein griffartiges Formteil 2 skizziert, das einen Hohlraum 1 aufweist. Der Hohlraum 1 erstreckt sich in Richtung einer Längsachse L. Diese Längsachse kann - wie vorliegend - auch eine leichte Krümmung aufweisen. Natürlich wäre es auch denkbar, dass das Formteil eine stärkere Krümmung aufweist, wie es z. B. bei einem Türgriff der Fall wäre. Wesentlich ist lediglich, dass sich eine Richtung ergibt, in die sich der Hohlraum 1 erstreckt und entlang der ein später beschriebenes Projektil bewegt wird, um den Hohlraum zu erzeugen. Wesentlich ist ferner, dass der Hohlraum 1 weitgehend abgeschlossen ist; wie später noch gesehen wird, existiert lediglich eine kleine zylindrische Öffnung zwischen Hohlraum 1 und der Umgebung, die vom Eintauchen einer später noch beschriebenen Fluidzuführdüse herrührt. Die Größe des Hohlraums kann genau vorgegeben werden und ist bei der Konstruktion des Formteils definiert worden.

Bei Formteilen 2, wie sie in Fig. 1 dargestellt sind, sind Wanddickenunterschiede sowohl in Längsrichtung als auch quer dazu nur schwer zu vermeiden. Es können Dickstellen und Masseanhäufungen im Formteil auftreten. Dies beeinflusst die Kühlzeit negativ und kann zu Einfallstellen am Formteil führen.

Griffartige Formteile mit Hohlräumen können mittels der Gasinjektionstechnik hergestellt werden. Vorteilhaft ist dabei, dass die Fluideinspritzdüsen zur Einspritzung des Gases klein sind, z. B. im Durchmesser 3 bis 8 mm betragen. Im Formteil 2 bleibt somit eine Öffnung mit dem Durchmesser der Gasinjektionsdüse.

Glatte Innenoberflächen und kürzere Kühlzeiten ermöglicht das Wasserinjektionsverfahren. Injektoren für die Wasserinjektionstechnik benötigen eine große Wasserströmung bei der Einspritzung, d. h. große Austrittsquerschnitte und somit einen Verschlussmechanismus am Düsenkopf, um ein Eindringen der zuerst eingespritzten Kunststoffmenge zu verhindern. Diese Wasserdüsen bauen daher relativ groß, z. B. 10 mm im Durchmesser.

Im Formteil 2 verbleibt eine Öffnung mit diesem Durchmesser. Durch die baulichen Grenzen ist ein Einbau eines Wasserinjektors zum direkten Einspritzen in das Formteil meist nicht möglich. Diese Injektoren werden deshalb meist in einen Angusskanal eingebaut.

Vorliegend kommt zur Fertigung des Formteils 2 die Projektil-Technik zum Einsatz. Dabei wird ein zuvor auf einen Fluidinjektor aufgesetztes Projektil von einem Fluid durch die zuvor eingespritzte Kunststoffschmelze getrieben. Dabei kann die Geschwindigkeit des Projektils durch den Fluiddruck und/oder durch die Fluidmenge bzw. den Fluidvolumenstrom gesteuert oder geregelt werden, wobei dies auch gemäß einem vorgegebenen Profilverlauf erfolgen kann.

Das Projektil kann im Formteil verbleiben. Durch das Projektil werden sehr gleichmäßige Wanddicken auch bei Umlenkungen entlang der Längsachse L erreicht. Da das Projektil den Kunststoff aus der Innenwandung ausräumt und gleichzeitig die Wandung glättet, sind die erzielbaren Oberflächen auch bei glasfaserverstärkten Typen sehr gut. In diesen Fällen wird das Projektil auf die Fluidzuführdüse in Richtung des gewünschten Hohlraumes gesetzt und, nachdem das Projektil mit Schmelze umgeben wurde, durch das Fluid in das Formteil geschossen.

Vorliegend sind besondere Vorkehrungen getroffen, um den geschlossenen Hohlraum 1 gemäß Fig. 1 zu erzeugen.

Bei Verwendung der Gaseinspritztechnik werden z. B. Injektoren verwendet, die einen Ringspalt für den Gasaustritt aufweisen. Für diese Formteile muss der Injektor von der Seite entweder in Entformungsrichtung in die Kavität des Spritzgießwerkzeugs hereinragen oder - in der Trennebene angeordnet, was allerdings keineswegs zwingend ist - in das Formteil hineinbewegt und zur Entformung zurückgefahren werden.

Beim Einspritzen von z. B. Wasser als Fluid ist zusätzlich noch eine Verschlussfunktion für die Wasseraustrittsöffnung erforderlich.

Für die Einspritzung wird gemäß der Erfindung eine Lösung angeboten, um ein Projektil so in der Kavität auf dem Injektor zu halten, dass es positionsgenau gehalten wird und gleichzeitig das Eindringen des Fluids bei der Vorfüllung verhindert.

In Fig. 2 ist zu sehen, wie eine Fluidzuführdüse 8 in der Kavität 5 des zweiteiligen Spritzgießwerkzeugs 3, 4 positioniert wird, um einmal das Projektil 10 zu positionieren und dann das Fluid zu injizieren, das den Hohlraum 1 ausformt.

Die Fluidzuführdüse, 8, die an einer Eintrittsöffnung 7 des Spritzgießwerkzeugs 3, 4 angeordnet ist, hat einen in die Kavität 5 eintretenden Abschnitt 11. In der Fluidzuführdüse 8 ist eine Fluidöffnung (Bohrung) 9 vorgesehen, über die das Fluid injiziert wird. Zumindest der eintretende Abschnitt 11 hat eine zylindrische, hinterschnittsfreie Form.

Die Wahl des Orts der Fluidzuführdüse 8 wird fachmännisch gewählt. Sie kann, muss aber nicht in der Werkzeugtrennebene liegen. Sie kann beispielswiese in einem Schieber des Werkzeugs sitzen oder auch direkt in die Kavität hineinragen. In letzterem Falle muss die Fluidzuführdüse zuerst in das geöffnete Werkzeug eingefahren werden und danach das Projektil 10 aufgesetzt werden.

Vorgesehen ist, dass die Fluidzuführdüse 8 und namentlich ihr eintretender Abschnitt 11 in Richtung des Doppelpfeils in Fig. 2 in die Kavität 5 hinein- und herausgefahren werden kann. Demgemäß ist eine Einschubrichtung E definiert, entlang der die Fluidzuführdüse 8 in ihrer Achsrichtung bewegt werden kann. Wesentlich ist, dass der eintretende Abschnitt 11 in Einschubrichtung E betrachtet hinterschnittsfrei ausgebildet ist, so dass die Fluidzuführdüse 8 auch bei fertig gespritztem Formteil 2 aus demselben herausgezogen werden kann. Um den geschlossenen Hohlraum 1 mit der Projektil-Technik fertigen zu können, ist weiterhin vorgesehen, dass zwischen der Längsachse L, entlang der sich der Hohlraum 1 erstreckt, und der Einschubrichtung E ein Winkel α vorliegt, der mindestens 30° beträgt. Bevorzugt ist der Winkel 90°. Dies ist in Fig. 2 illustriert.

Bewegt sich das Projektil 10 mit seiner Außenumfangskontur 13 durch das schmelzflüssige Kunststoffmaterial wird eine weitgehend konstante Wanddicke im Formteil 2 erzeugt, d. h. der Abstand zwischen der Außenumfangskontur 13 des Projektils 10 und der Außenkontur 14 des Formteils 2 (s. Fig. 1) ist konstant.

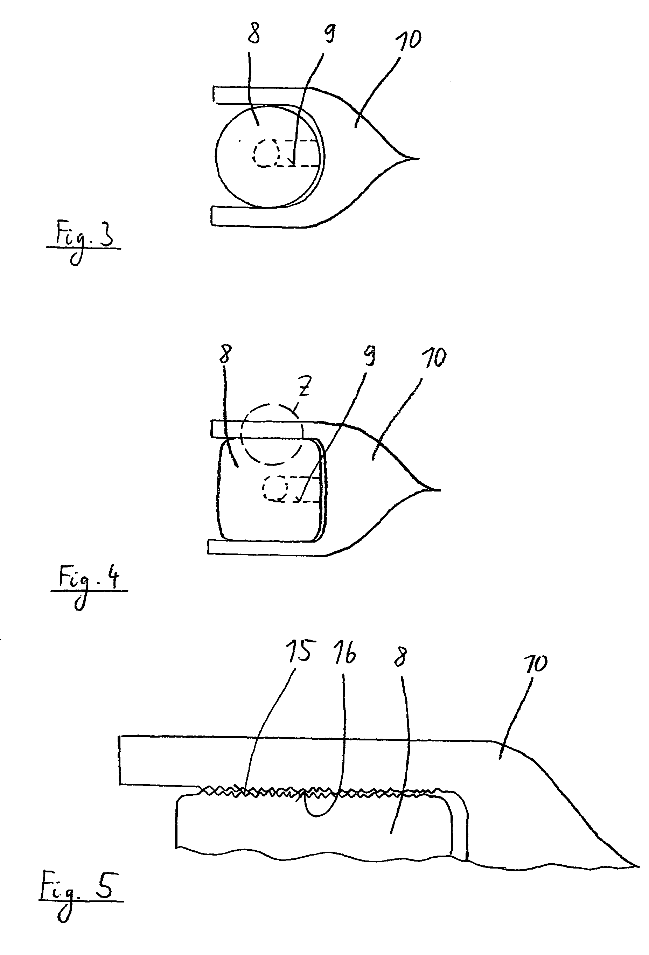

Wie in der Ansicht C gemäß Fig. 2 in den Figuren 3 und 4 für zwei verschiedene Ausführungsbeispiele zu sehen ist, ist das Projektil 10 zunächst auf die Fluidzuführdüse 8 aufgesetzt, wobei bevorzugt eine verdreh- und kippsichere Anordnung vorgesehen ist, um das Projektil 10 vor seinem Abschuss in der richtigen bzw. optimalen Position zu halten.

In Fig. 5 ist schematisch angedeutet, dass entweder die Oberfläche 15 der Fluidzuführdüse 8, die das Projektil 10 kontaktiert, und/oder die Oberfläche 16 des Projektils 10, das die Fluidzuführdüse 8 kontaktiert, aufgeraut ist, so dass das Projektil 10 zunächst sicher auf der Fluidzuführdüse 8 gehalten wird und sich nicht ohne weiteres löst. Dies erhöht die Prozesssicherheit des Verfahrens.

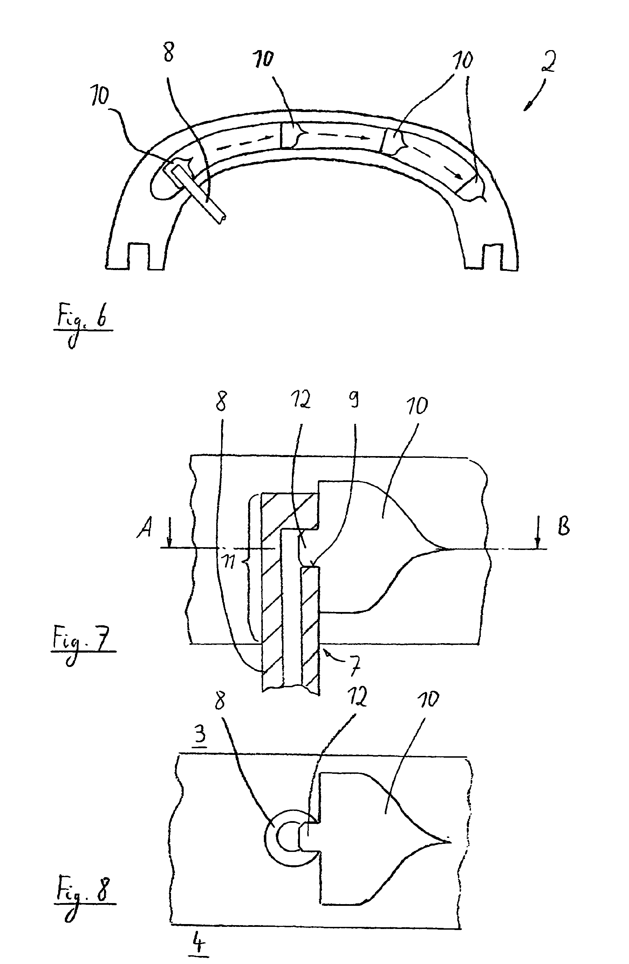

Wird Fluid über die Fluidöffnung (Bohrung) 9 in der Fluidzuführdüse 8 injiziert, wird das Projektil 10 abgeschossen und bewegt sich entlang einer Bahn, wie es schematisch in Fig. 6 für vier aufeinander folgende Prozessstadien dargestellt ist. Am Ende des Prozesses befindet sich das Projektil 10 in der rechten Endposition, wo es im Formteil 2 verbleibt.

Eine besonders bevorzugte Lösung der Ausgestaltung von Fluidzuführdüse 8 und Projektil 10 ist in den Figuren 7 und 8 skizziert. Hier ist zu sehen, dass das Projektil 10 an seinem in Schussrichtung entgegengesetzten Ende einen zapfenförmigen Vorsprung 12 aufweist, der vorliegend zylindrisch ausgebildet ist. Mit diesem zapfenförmigen Vorsprung 12 wird das Projektil in die Fluidöffnung 9 eingesetzt, was nicht nur den Vorteil hat, dass das Projektil 10 genau in der gewünschten Lage gehalten wird, sondern dass die Fluidöffnung 9 auch zuverlässig abgedichtet und verschlossen wird, so dass keine Schmelze in einem frühen Verfahrensstadium in die Fluidöffnung 9 eintreten und diese verstopfen kann.

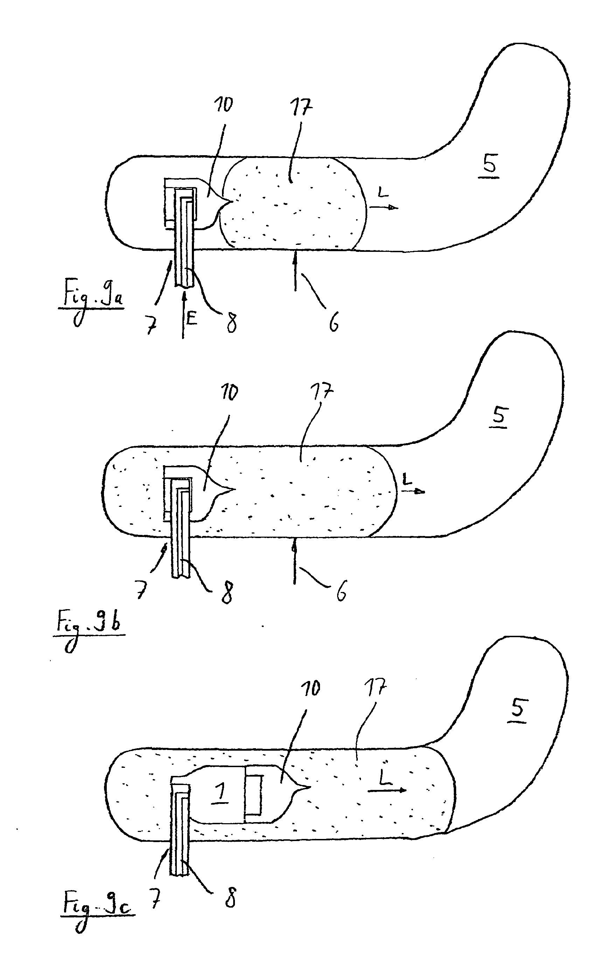

In den Figuren 9a bis 9e ist der Verfahrensablauf noch einmal für ein anders Formteil dargestellt.

In Fig. 9a ist zu sehen, wie die mit dem Projektil 10 bestückte Fluidzuführdüse 8 in Einschubrichtung E, die rechtwinklig zur Längsachse L des gewünschten Hohlraums 1 ist, in die Kavität 5 des Spritzgießwerkzeugs eingeschoben wurde. Die Fluidzuführdüse 8 befindet sich an einer Eintrittsöffnung 7. An einer entfernten Stelle befindet sich eine Schmelzeeinspritzöffnung 6, über die Kunststoffschmelze 17 in die Kavität 5 eingespritzt wird. Dabei ist die relative Lage der Stellen 7 und 6 so gewählt, dass die Kunststoffschmelze auf die Frontseite des Projektils 10 auftrifft, was gerade in Fig. 9a gesehen werden kann.

Ist die für die Bildung des Formteils 2 nötige Menge an Kunststoffschmelze 17 in die Kavität eingespritzt, ergibt sich die Situation, wie sie in Fig. 9b dargestellt ist. Das Projektil 10 samt Fluidzuführdüse 8 ist vollständig von der Kunststoffschmelze 17 ummantelt.

Nunmehr wird - was in Fig. 9c illustriert ist - über die Fluidzuführdüse 8 Fluid (Wasser oder Gas) eingespritzt. Hierdurch wird das Projektil 10 von der Fluidzuführdüse 8 abgesprengt und beginnt, sich in Längsrichtung L durch die Kunststoffschmelze 17 zu bewegen und den Hohlraum 1 hinter sich auszubilden. Dabei verdrängt das Projektil 10 die Kunststoffschmelze 17 zum Fließwegende.

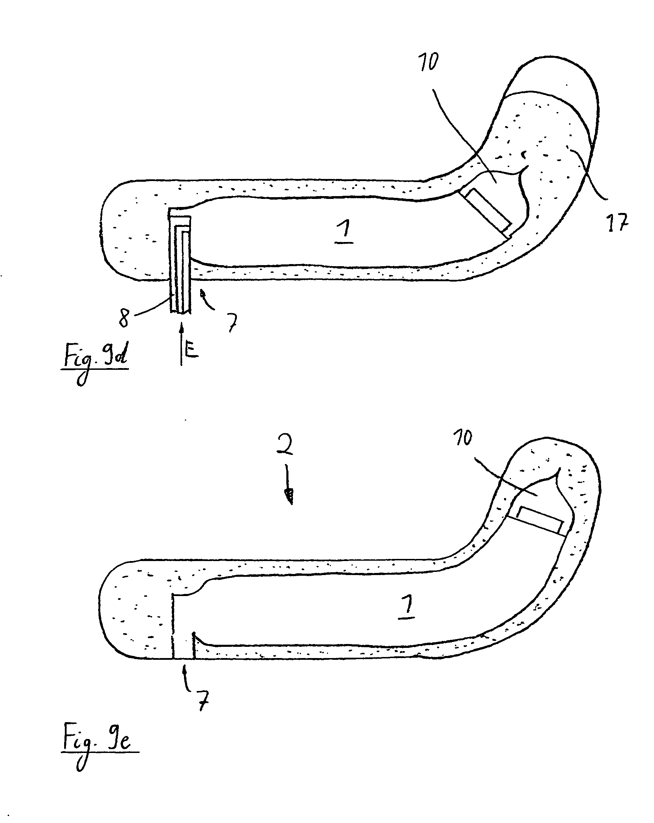

In Fig. 9d ist zu sehen, dass das Projektil 10 bereits den größten Teil seines Weges zurückgelegt hat. Die Kavität des Spritzgießwerkzeugs ist bereits fast vollständig gefüllt.

Der Fluiddruck wird aufrecht erhalten, so dass sich das Projektil 10 bis in die in Fig. 9e skizzierte Lage bewegt, in der die Kavität vollständig mit Kunststoffschmelze 17 gefüllt ist, da das Projektil 10 die Kunststoffschmelze entsprechend verdrängt hat. Damit hat das Formteil 2 genau die Größe des Hohlraums 1, die gewünscht ist. Die Fluidzuführdüse 8 ist entgegen der Einschubrichtung E wieder aus der Kavität bzw. aus dem Formteil 2 abgezogen worden, ohne dieses zu beschädigen. Abgesehen von einer kleinen Öffnung an der Eintrittsöffnung 7 für die Fluidzuführdüse ist der Hohlraum 1 vollständig geschlossen.

Nach dem zeitlich einstellbaren Abbau des Fluiddrucks und der Abkühlung des Kunststoffes wird das Werkzeug geöffnet und der Injektor herausgefahren.

Sofern eine Flüssigkeit (Wasser) als Fluid verwendet wurde, kann dieses über die Öffnung an der Stelle 7 aus dem Hohlraum 1 austreten.

Die Fluidzuführdüse 8 kann sehr klein sein, auch zur Aufnahme eines großen Projektils 10, da die Fluidzuführdüse 8 keine Verschlussfunktion aufweisen muss. Das Eindringen der Schmelze bei der Verfüllung mit Schmelze verhindert das Projektil 10 selber durch den zapfenförmigen Vorsprung 12 oder auch einfach dadurch, dass es die Fluidöffnung 9 abdeckt.

Als Injektionsdüse für das Fluid, auch für Wasser, genügt folglich ein Rohr mit einer Öffnung 9 für das Fluid, das das Projektil 10 vorantreibt.

Durch dieses Verfahren ist es möglich, Formteile 2 mit einem einfachen, kleinen und kostengünstigen Injektor herzustellen, der nur eine kleine Öffnung im Formteil hinterlässt. Auch Injektoren von deutlich weniger als 3 mm sind herstellbar, da es sich bei diesem nur um ein Rohr handelt.

Das Verfahren kann grundsätzlich auch mit allen für die Fluidinjektionstechnik bekannten Verfahren, wie z.B. Teilfüllung, Überlauf und Masserückdrückverfahren, arbeiten.

Der Ablauf des Verfahrens kann noch einmal so zusammengefasst werden:
- Das Spritzgießwerkzeug wird geöffnet.
- Die Fluidzuführdüse (Injektor) wird in Einschubrichtung E in die Kavität gefahren (Anordnung bevorzugt aber nicht notwendigerweise in der Trennebene des Spritzgießwerkzeugs).
- Das Projektil 10 wird mit Roboter oder von Hand auf die Fluidzuführdüse aufgesetzt.
- Das Spritzgießwerkzeug wird geschlossen.
- Es erfolgt das Einspritzen von Kunststoffschmelze in der Weise, dass das Projektil 10 entgegen seiner späteren Bewegungsrichtung mit Kunststoff umschlossen wird.
- Dann erfolgt das Einspritzen des Fluids, die Ablösung des Projektils 10 von der Fluidzuführdüse 8 und das Vorantreiben des Projektils durch die Kunststoffschmelze.
- Anschließend kühlt der Kunststoff ab und verfestigt sich.
- Nach einer vorgewählten Zeit wird der Fluiddruck abgebaut und das Gas bzw. die Flüssigkeit beispielswiese durch die Fluidzuführdüse herausgelassen.
- Die Fluidzuführdüse wird in Einschubrichtung E aus dem Formteil herausgezogen.
- Dann wird das Spritzgießwerkzeug geöffnet.
- Das Formteil samt eingeschlossenem Projektil wird entnommen.

Das erläuterte Verfahren eignet sich zur Herstellung von Formteilen, wobei zunächst eine Teilfüllung der Kavität mit Schmelze erfolgt und die vollständige Füllung des Formteils erst infolge der Schmelzeverdrängung mittels des durch das Fluid verdrängten Projektils stattfindet.

Genau so ist es aber möglich, zunächst die Kavität vollständig mit Schmelze zu füllen und danach durch das infolge des Fluiddruckes bewegte Projektil Schmelze in eine Nebenkavität zu verdrängen, wobei zwischen Haupt- und Nebenkavität Verschlussmittel angeordnet sein können, die entsprechend gesteuert werden. Das Projektil verbleibt wie dargestellt in der Kavität.

Anstatt in eine Nebenkavität kann die Schmelze auch wieder zurück in den Schneckenvorraum zurückgedrückt werden.

### Bezugszeichenliste:

- 1: Hohlraum
- 2: Formteil
- 3,4: Spritzgießwerkzeug
- 3: Hälfte des Spritzgießwerkzeugs
- 4: Hälfte des Spritzgießwerkzeugs
- 5: Kavität
- 6: Schmelzeeinspritzöffnung
- 7: Eintrittsöffnung für die Fluidzuführdüse
- 8: Fluidzuführdüse,
- 9: Fluidöffnung (Bohrung)
- 10: Projektil
- 11: eintretender Abschnitt der Fluidzuführdüse
- 12: zapfenförmiger Vorsprung
- 13: Außenumfangskontur
- 14: Außenkontur
- 15: aufgerauter Bereich
- 16: aufgerauter Bereich
- 17: Kunststoffschmelze
- L: Längsachse
- E: Einschubrichtung
- α: Winkel

## Patentansprüche

1. Vorrichtung zum Spritzgießen eines mindestens einen Hohlraum (1) aufweisenden Formteils (2), wobei sich der Hohlraum (1) zumindest abschnittsweise in Richtung einer Längsachse (L) des Formteils (2) erstreckt, mit einem mindestens zweiteiligen Spritzgießwerkzeug (3, 4), das eine Kavität (5) aufweist, die zumindest einen sich in Richtung der Längsachse (L) erstreckenden Kavitätsabschnitt hat, wobei das Spritzgießwerkzeug (3, 4) mindestens eine Schmelzeeinspritzöffnung (6) für Kunststoffschmelze aufweist, wobei das Spritzgießwerkzeug (3, 4) eine Eintrittsöffnung (7) für eine Fluidzuführdüse (8) aufweist, wobei an der Fluidzuführdüse (8) im Bereich einer Fluidöffnung (9) ein Projektil (10) anordenbar ist, das infolge des injizierten Fluids in Richtung der Längsachse (L) durch den noch schmelzflüssigen Kunststoff getrieben werden kann,
**dadurch gekennzeichnet, dass**
die Fluidzuführdüse (8) einen in die Kavität (5) eintretenden Abschnitt (11) aufweist, der in einer Einschubrichtung (E) der Fluidzuführdüse (8) in die Kavität (5) hinterschnittsfrei ausgebildet ist, wobei zwischen der Längsachse (L) und der Einschubrichtung (E) ein Winkel (α) vorliegt, der mindestens 30° beträgt.

2. Vorrichtung nach Anspruch 1, **dadurch gekennzeichnet, dass** der Winkel (α) zwischen 80° und 90° beträgt.

3. Vorrichtung nach Anspruch 1 oder 2, **dadurch gekennzeichnet, dass** das Formteil (2) den Hohlraum (1), abgesehen von der Eintrittsöffnung für den eintretenden Abschnitt (11) der Fluidzuführdüse (8), vollständig einschließt.

4. Vorrichtung nach einem der Ansprüche 1 bis 3, **dadurch gekennzeichnet, dass** der in die Kavität (5) eintretende Abschnitt (11) der Fluidzuführdüse (8) eine zylindrische Form aufweist.

5. Vorrichtung nach einem der Ansprüche 1 bis 4, **dadurch gekennzeichnet, dass** die Fluidöffnung (9) am in die Kavität (5) eintretenden Abschnitt (11) der Fluidzuführdüse (8) als Bohrung ausgebildet ist, deren Achse vorzugsweise in Richtung der Längsachse (L) des Formteils (2) weist.

6. Vorrichtung nach Anspruch 5, **dadurch gekennzeichnet, dass** das Projektil (10) an seinem entgegen der Vortriebsrichtung liegenden Ende einen zapfenförmigen Vorsprung (12) aufweist, der zum abdichtenden Einsetzen in die Bohrung (9) ausgebildet ist.

7. Vorrichtung nach einem der Ansprüche 1 bis 6, **dadurch gekennzeichnet, dass** eine Halterung für das Projektil (10) im Bereich der Fluidöffnung (9) der Fluidzuführdüse (8) und das Projektil (10) so ausgebildet sind, dass das Projektil (10) in seiner in die Halterung eingesetzten Position verdrehsicher gehalten wird.

8. Vorrichtung nach einem der Ansprüche 1 bis 7, **dadurch gekennzeichnet, dass** das Projektil (10) eine Außenumfangskontur (13) aufweist, die der Außenkontur (14) des Formteils (2) unter Berücksichtigung einer weitgehend konstanten Wanddicke des Formteils (2) zwischen dem Hohlraum (1) und der Außenkontur (14) des Formteils (2) entspricht.

9. Vorrichtung nach einem der Ansprüche 1 bis 8, **dadurch gekennzeichnet, dass** eine Halterung für das Projektil (10) im Bereich der Fluidöffnung (9) der Fluidzuführdüse (8) und/oder das Projektil (10) so ausgebildet sind, dass ein Widerstand gegen das Lösen des Projektils (10) im auf die Fluidzuführdüse (8) aufgesetzten Zustand vorliegt, wobei die Ausbildung insbesondere eine Aufrauung der Kontaktfläche zwischen Halterung und Projektil (10) ist.

10. Verfahren zum Spritzgießen eines mindestens einen Hohlraum (1) aufweisenden Formteils (2), wobei sich der Hohlraum (1) zumindest abschnittsweise in Richtung einer Längsachse (L) des Formteils (2) erstreckt, mit einer Vorrichtung nach einem der Ansprüche 1 bis 9,
**dadurch gekennzeichnet, dass**
es die Schritte aufweist:
a) Positionieren des Projektils (10) auf der Fluidzuführdüse (8), Einbringen der Fluidzuführdüse (8) samt Projektil (10) in die Kavität (5) des Spritzgießwerkzeugs (3, 4), Schließen des Spritzgießwerkzeugs (3, 4);
b) Einspritzen von Kunststoffschmelze in die Kavität (5), so dass der in die Kavität (5) hineinragende Abschnitt (11) der Fluidzuführdüse (8) samt Projektil (10) von der Kunststoffschmelze ummantelt ist, wobei das Volumen der Kunststoffschmelze so bemessen ist, dass es zur vollständigen Füllung der Kavität (5) unter Berücksichtigung des gewünschten Hohlraums (1) gerade ausreicht;
c) Injektion von Fluid mittels der Fluidzuführdüse (8), so dass das Projektil (10) abgeschossen und entlang der Längsachse (L) durch das noch schmelzflüssige Material getrieben wird, bis die Kavität (5) vollständig mit Kunststoffschmelze gefüllt ist;
d) Abkühlenlassen der Kunststoffschmelze;
e) Öffnen des Spritzgießwerkzeugs (3, 4), Entnahme des Formteils (2), Abziehen des in das Formteil (2) hineinragenden Abschnitts der Fluidzuführdüse (8).

11. Verfahren zum Spritzgießen eines mindestens einen Hohlraum (1) aufweisenden Formteils (2), wobei sich der Hohlraum (1) zumindest abschnittsweise in Richtung einer Längsachse (L) des Formteils (2) erstreckt, mit einer Vorrichtung nach einem der Ansprüche 1 bis 9,
**dadurch gekennzeichnet, dass**
es die Schritte aufweist:
a) Positionieren des Projektils (10) auf der Fluidzuführdüse (8), Einbringen der Fluidzuführdüse (8) samt Projektil (10) in die Kavität (5) des Spritzgießwerkzeugs (3, 4), Schließen des Spritzgießwerkzeugs (3, 4);
b) Einspritzen von Kunststoffschmelze in die Kavität (5), wobei die Kavität (5) des Spritzgießwerkzeugs (3, 4) vollständig mit Kunststoffschmelze gefüllt wird;
c) Injektion von Fluid mittels der Fluidzuführdüse (8), so dass das Projektil (10) abgeschossen und entlang der Längsachse (L) durch das noch schmelzflüssige Material getrieben wird, wobei ein Teil der Kunststoffschmelze in eine Überlaufkavität und/oder in den Schneckenvorraum einer Einspritzschnecke aus der Kavität (5) des Spritzgießwerkzeugs (3, 4) wieder ausgetrieben wird;
d) Abkühlenlassen der Kunststoffschmelze;
e) Öffnen des Spritzgießwerkzeugs (3, 4), Entnahme des Formteils (2), Abziehen des in das Formteil (2) hineinragenden Abschnitts der Fluidzuführdüse (8).

## Claims

1. Device for the injection moulding of a moulded part (2) comprising at least one void (1), wherein the void (1) extents at least in sections in the direction of a longitudinal axis (L) of the moulded part (2) with an injection moulding tool (3, 4) comprising at least two parts and having a cavity (5), which cavity (5) has at least one cavity section extending in the direction of the longitudinal axis (L), wherein the injection moulding tool (3, 4) has at least one melt injection opening (6) for plastic melt, wherein the injection moulding tool (3, 4) has an inlet aperture (7) for a fluid injection nozzle (8), wherein a projectile (10) can be positioned at the fluid injection nozzle (8) in the region of the fluid aperture (9), which projectile (10) can be caused to flow in the direction of the longitudinal axis (L) through the still melted plastic due to the injected fluid,
**characterized in that**
the fluid injection nozzle (8) comprises a section (11) entering into the cavity (5), which section (11) is free from any undercut in a direction (E) of insertion of the fluid injection nozzle (8) into the cavity (5), wherein an angle (α) is arranged between the longitudinal axis (L) and the direction (E) of insertion, which angel (α) is at least 30°.

2. Device according to claim 1, **characterized in that** the angle (α) is between 80° and 90°.

3. Device according to claim 1 or 2, **characterized in that** the moulded part (2) encases the void (1) completely, apart from the inlet aperture for the entering section (11) of the fluid injection nozzle (8).

4. Device according to any of claims 1 to 3, **characterized in that** the section (11) of the fluid injection nozzle (8) entering into the cavity (5) has a cylindrical shape.

5. Device according to any of claims 1 to 4, **characterized in that** the fluid aperture (9) at the section (11) of the fluid injection nozzle (9) entering into the cavity (5) is designed as a bore, which axis is preferably directed into the direction of the longitudinal axis (L) of the moulded part (2).

6. Device according to claim 5, **characterized in that** the projectile (10) comprises a cylindrical nose (12) at its end being arranged opposite to the driving direction of the projectile (10), which nose (12) is designed to be inserted into the fluid aperture (9) in a sealed manner.

7. Device according to any of claims 1 to 6, **characterized in that** a holder for the projectile (10) in the region of the fluid aperture (9) of the fluid injection nozzle (8) and the projectile (10) are designed in such a manner that the projectile (10) is secured against twisting when inserted into the holder.

8. Device according to any of claims 1 to 7, **characterized in that** the projectile (10) has a contour of the outer circumference (13) which corresponds to the outer contour (14) of the moulded part (2) considering a substantial constant wall thickness of the moulded part (2) between the void (1) and the outer circumference (14) of the moulded part (2).

9. Device according to any of claims 1 to 8, **characterized in that** a holder for the projectile (10) in the region of the fluid aperture (9) of the fluid injection nozzle (8) and/or the projectile (10) are designed in such a manner, that a resistance is existing against loosening of the projectile (10) when being put onto the fluid injection nozzle (8), wherein especially the contact surface between the holder and the projectile (10) is roughened.

10. Method for the injection moulding of a moulded part (2) comprising at least one void (1), wherein the void (1) extents at least in sections in the direction of a longitudinal axis (L) of the moulded part (2) with a device according to any of claims 1 to 9,
**characterized in that**
it comprises the steps of:
a) positioning of the projectile (10) on the fluid injection nozzle (8), inserting of the fluid injection nozzle (8) together with the projectile (10) into the cavity (5) of the injection moulding tool (3, 4), closing of the injection moulding tool (3, 4);
b) injection of plastic melt into the cavity (5) so that the section (11) of the fluid injection nozzle (8) extending into the cavity (5) including the projectile (10) is covered by the plastic melt, wherein the volume of the plastic melt is measured in such a way that it is just sufficient for the complete filling of the cavity (5) considering the desired void (1);
c) injection of fluid by means of the fluid injection nozzle (8) so that the projectile (10) is shot and is caused to flow through the still liquid material along the longitudinal axis (L) until the cavity is completely filled with plastic melt;
d) letting the plastic melt cool;
e) opening of the injection moulding tool (3, 4), demoulding of the moulded part (2), extracting of the section of the fluid injection nozzle (8) which extends into the moulded part (2).

11. Method for the injection moulding of a moulded part (2) comprising at least one void (1), wherein the void (1) extents at least in sections in the direction of a longitudinal axis (L) of the moulded part (2) with a device according to any of claims 1 to 9,
**characterized in that**
it comprises the steps of:
a) positioning of the projectile (10) on the fluid injection nozzle (8), inserting of the fluid injection nozzle (8) together with the projectile (10) into the cavity (5) of the injection moulding tool (3, 4), closing of the injection moulding tool (3, 4);
b) injection of plastic melt into the cavity (5), wherein the cavity (5) of the injection moulding tool (3, 4) is completely filled with plastic melt;
c) injection of fluid by means of the fluid injection nozzle (8) so that the projectile (10) is shot and is caused to flow through the still liquid material along the longitudinal axis (L), wherein a part of the plastic melt is again expelled from the cavity (5) of the injection moulding tool (3, 4) in an overflow cavity and/or in the space in front of the screw of an injection screw;
d) letting the plastic melt cool;
e) opening of the injection moulding tool (3, 4), demoulding of the moulded part (2), extracting of the section of the fluid injection nozzle (8) which extends into the moulded part (2).

## Revendications

1. Dispositif de moulage par injection d'une pièce moulée (2) présentant au moins un espace creux (1), l'espace creux (1) s'étendant au moins en partie dans la direction d'un axe longitudinal (L) de la pièce façonnée (2), avec au moins un outil de moulage par injection au moins en deux parties (3, 4), qui présente une cavité (5) qui a au moins une portion de cavité s'étendant dans la direction de l'axe longitudinal (L), l'outil de moulage par injection (3, 4) présentant au moins une ouverture d'injection de matière en fusion (6) pour du plastique en fusion, l'outil de moulage par injection (3, 4) présentant une ouverture d'entrée (7) pour une buse d'alimentation de fluide (8), un projectile (10) pouvant être disposé sur la buse d'alimentation en fluide (8) dans la région d'une ouverture de fluide (9), lequel projectile peut être propulsé à la suite de l'injection du fluide dans la direction de l'axe longitudinal (L) à travers le plastique encore en fusion,
**caractérisé en ce que**
la buse d'alimentation de fluide (8) présente une portion (11) pénétrant dans la cavité (5), qui est réalisée sans contre-dépouille dans la cavité (5) dans une direction d'enfoncement (E) de la buse d'alimentation de fluide (8), un angle (α) existant entre l'axe longitudinal (L) et la direction d'enfoncement (E), lequel vaut au moins 30°.

2. Dispositif selon la revendication 1, **caractérisé en ce que** l'angle (α) est compris entre 80° et 90°.

3. Dispositif selon la revendication 1 ou 2, **caractérisé en ce que** la pièce moulée (2) entoure complètement l'espace creux (1), à l'exception de l'ouverture d'entrée pour la portion entrante (11) de la buse d'alimentation de fluide (8).

4. Dispositif selon l'une quelconque des revendications 1 à 3, **caractérisé en ce que** la portion (11) de la buse d'alimentation de fluide (8) entrant dans la cavité (5) présente une forme cylindrique.

5. Dispositif selon l'une quelconque des revendications 1 à 4, **caractérisé en ce que** l'ouverture de fluide (9) est réalisée sous forme d'alésage au niveau de la portion (11) de la buse d'alimentation de fluide (8) entrant dans la cavité (5), l'axe de l'alésage étant de préférence orienté dans la direction de l'axe longitudinal (L) de la pièce moulée (2).

6. Dispositif selon la revendication 5, **caractérisé en ce que** le projectile (10) présente au niveau de son extrémité située à l'opposé de la direction d'avance, une saillie (12) en forme de goujon, qui est réalisée pour l'insertion étanche dans l'alésage (9).

7. Dispositif selon l'une quelconque des revendications 1 à 6, **caractérisé en ce qu'**une fixation pour le projectile (10) dans la région de l'ouverture de fluide (9) de la buse d'alimentation de fluide (8) et le projectile (10) sont réalisés de telle sorte que le projectile (10) soit maintenu de manière fixée en rotation dans sa position insérée dans la fixation.

8. Dispositif selon l'une quelconque des revendications 1 à 7, **caractérisé en ce que** le projectile (10) présente un contour périphérique extérieur (13) qui correspond au contour extérieur (14) de la pièce moulée (2) en tenant compte d'une épaisseur de paroi essentiellement constante de la pièce moulée (2) entre l'espace creux (1) et le contour extérieur (14) de la pièce moulée (2).

9. Dispositif selon l'une quelconque des revendications 1 à 8, **caractérisé en ce qu'**une fixation pour le projectile (10) dans la région de l'ouverture de fluide (9) de la buse d'alimentation de fluide (8) et/ou le projectile (10) sont réalisés de telle sorte qu'il existe une résistance au desserrement du projectile (10) dans l'état placé sur la buse d'alimentation de fluide (8), ceci étant notamment réalisé par le biais d'une rugosité de la surface de contact entre la fixation et le projectile (10).

10. Procédé de moulage par injection d'une pièce moulée (2) présentant au moins un espace creux (1), l'espace creux (1) s'étendant au moins en partie dans la direction d'un axe longitudinal (L) de la pièce moulée (2), avec un dispositif selon l'une quelconque des revendications 1 à 9,
**caractérisé en ce que**
le procédé présente les étapes suivantes :
a) positionnement du projectile (10) sur la buse d'alimentation de fluide (8), introduction de la buse d'alimentation de fluide (8) avec le projectile (10) dans la cavité (5) de l'outil de moulage par injection (3, 4), fermeture de l'outil de moulage par injection (3, 4) ;
b) injection de plastique en fusion dans la cavité (5), de sorte que la portion (11) de la buse d'alimentation de fluide (8) pénétrant dans la cavité (5), conjointement avec le projectile (10), soit enveloppée par le plastique en fusion, le volume de plastique en fusion étant mesuré de telle sorte qu'il suffise exactement à remplir complètement la cavité (5) en tenant compte de l'espace creux souhaité (1) ;
c) injection de fluide au moyen de la buse d'alimentation de fluide (8), de sorte que le projectile (10) soit lancé et propulsé le long de l'axe longitudinal (L) à travers le matériau encore en fusion, jusqu'à ce que la cavité (5) soit complètement remplie de plastique en fusion ;
d) refroidissement du plastique en fusion ;
e) ouverture de l'outil de moulage par injection (3, 4), enlèvement de la pièce moulée (2), et retrait de la portion de la buse d'alimentation de fluide (8) pénétrant dans la pièce moulée (2).

11. Procédé de moulage par injection d'une pièce moulée (2) présentant au moins un espace creux (1), l'espace creux (1) s'étendant au moins en partie dans la direction de l'axe longitudinal (L) de la pièce moulée (2), avec un dispositif selon l'une quelconque des revendications 1 à 9,
**caractérisé en ce que**
le procédé présente les étapes suivantes :
a) positionnement du projectile (10) sur la buse d'alimentation de fluide (8), introduction de la buse d'alimentation de fluide (8) avec le projectile (10) dans la cavité (5) de l'outil de moulage par injection (3, 4), fermeture de l'outil de moulage par injection (3, 4) ;
b) injection de plastique en fusion dans la cavité (5), la cavité (5) de l'outil de moulage par injection (3, 4) étant complètement remplie avec le plastique en fusion ;
c) injection de fluide au moyen de la buse d'alimentation de fluide (8), de sorte que le projectile (10) soit lancé et propulsé le long de l'axe longitudinal (L) à travers le matériau encore en fusion, une partie du plastique en fusion étant à nouveau extraite dans une cavité de débordement et/ou dans l'espace avant la vis d'une vis d'injection hors de la cavité (5) de l'outil de moulage par injection (3, 4) ;
d) refroidissement du plastique en fusion ;
e) ouverture de l'outil de moulage par injection (3, 4), enlèvement de la pièce moulée (2), retrait de la portion de la buse d'alimentation de fluide (8) pénétrant dans la pièce moulée (2).
